# EUROPÄISCHE PATENTSCHRIFT

(11) **EP 0 992 429 B1**
(45) Veröffentlichungstag und Bekanntmachung des Hinweises auf die Patenterteilung: **14.09.2005**
(21) Anmeldenummer: 99402438.8
(22) Anmeldetag: 05.10.1999
(51) Int. Cl.: B64G 1/10, B64G 1/66, F41H 11/02, H04B 7/185

(54) **Satellitengestütztes Verteidigungssystem und Verfahren zur satellitengestützten Verteidigung**
Satellite based defence system and method for satellite based defence
Système de défense basé sur satellites et méthode pour la défense satellitaire

(30) Priorität: 06.10.1998 DE 19845911
(43) Veröffentlichungstag der Anmeldung: 12.04.2000
(73) Patentinhaber: SEL Verteidigungssysteme GmbH, 70435 Stuttgart (DE)
(72) Erfinder: Heine, Hans Wilfried, Thomson-CSF P.I.D Brevets, 94117 Arcueil Cedex (FR)
(74) Vertreter: Lucas, Laurent Jacques

(56) Entgegenhaltungen:
- DE-A- 3 421 855
- BURGESS THOMAS M: "Testing concepts and applications for the Strategic Defense Initiative (SDI)" AUTOTESTCOM '88 SYMPOSIUM PROCEEDINGS, 1988, Seiten 289-293, XP002139112 New York, NY, USA
- MILLER CHAUNCEY S: "Battle management onboard processing for SDI" 1990 IEEE AEROSPACE APPLICATIONS CONFERENCE DIGEST, 4. - 9. Februar 1990, Seiten 11-19, XP002139113 Vail, CO, USA
- FIEDLER S ET AL: "GEOSYNCHRONOUS SPACE BASED RADAR CONCEPT DEVELOPMENT FOR THEATER SURVEILLANCE" IEEE AEROSPACE APPLICATIONS CONFERENCE PROCEEDINGS,US,NEW YORK, 1996, Bd. CONF. 17, 1996, Seiten 77-90, XP000700860 ISBN: 0-7803-3197-4

## Beschreibung

Die Erfindung betrifft ein satellitengestütztes Verteidigungssystem mit mehreren die Erde umkreisenden Satelliten, die mit Sensor- und Nachrichtenübermittlungs-Einrichtungen zum Erfassen und Verfolgen beweglicher Ziele ausgestattet sind.

Bei einem derartigen bekannten System sind die Sensoreinrichtungen für Infrarotstrahlung empfindlich, und dadurch können startende Raketen erkannt und zumindest auf einem Teil ihres Flugwegs verfolgt werden, so daß hierdurch die Flugrichtung der Rakete festgestellt werden kann. Außerdem ist es bekannt, daß man von Flugzeugen aus, die mit Radareinrichtungen ausgerüstet sind (z.B. mit dem AWACS-System), den Luftraum überwachen kann. Die Ergebnisse dieser Überwachung werden dann durch Funksignale zu einer Station auf der Erdoberfläche übertragen.

Wenn im Fall eines militärischen Konflikts Abwehrmaßnahmen gegen ein Flugobjekt, das durch die bekannten Systeme entdeckt worden ist, getroffen werden müssen, so werden die Abwehrwaffen durch waffenzugeordnete Systeme geführt, beispielsweise durch Funksteuerung vom Boden aus in Kombination mit waffeneigenen Zielsucheinrichtungen, die bei Annäherung ans Ziel wirksam werden.

Ein Dokument "BURGESS THOMAS M : "Testing concepts and applications for the Strategic Defense Initiative (SDI)" AUTOTEST COM '88 SYMPOSIUM PROCEEDINGS, 1988, Seiten 289-293, New york,NY,USA" offenbart ein satellitengestützes Verteidigungssystem mit mehreren die Erde umkreisenden Satelliten.

Das erfindungsgemäße satellitengestützte Verteidigungssystem ist dadurch gekennzeichnet, daß dieselben Antennen sowohl für Radar-Sende- oder Empfangszwecke und für Nachrichtenübertragungszwecke verwendet werden. Hierdurch kann die hohe Richtwirkung der Antennen und deren Steuerbarkeit bezüglich ihrer Richtwirkung ausgenutzt werden, wodurch der technische Aufbau der genannten Einrichtungen vereinfacht wird.

Zum Erfassen und Verfolgen von Zielen, die keine leicht erkennbare Infrarotstrahlung aussenden, sind meistens Radarsensoren gut geeignet. Diese erfordern zum "Ausleuchten" eines Raumsektors bei der Überwachung im allgemeinen die Abstrahlung von Radarsignalen durch eine Radarsendeeinrichtung.

Bei der erfindungsgemäßen Ausführungsform nach Anspruch 3 ist von Vorteil, daß zum Suchen ein relativ großer Winkelbereich erfaßt werden kann, wohingegen zum Verfolgen und Führen von Abwehrwaffen zweckmäßigerweise die Suchcharakteristik einen kleineren Winkelbereich erfaßt, so daß die Erfassung der Koordinaten des Ziels mit größerer Genauigkeit erfolgen kann.

Bei der erfindungsgemäßen Ausführungsform nach Anspruch 4 ist von Vorteil, daß Satelliten Informationen austauschen können, was insbesondere im Hinblick auf die Ausrichtung mehrerer Satelliten auf ein einziges Ziel Vorteile bietet. Auch ermöglicht es diese Ausführungsform, daß Informationen zwischen einem Satelliten und einer weit entfernten Station, die sich nicht im Sichtbereich des Satelliten befindet, ausgetauscht werden können.

Hierzu kann gemäß der Ausführungsform nach Anspruch 5 die Anordnung so getroffen sein, daß Satelliten zum Durchleiten von Informationen, die sie erhalten, an andere Satelliten ausgebildet sind.

Gemäß den Ausführungsformen nach Anspruch 6 und 7 kann vorteilhaft ein Satellit mit einer Bodenstation und/oder einer Luftraumstation (z.B. in einem Flugzeug) in Verbindung treten.

Gemäß Anspruch 8 können sich die Sendeeinrichtungen und Empfangseinrichtungen für Radar auf einem einzigen Satelliten befinden. Ein einziger solcher Satellit kann somit schon gewisse Überwachungsfunktionen ausüben.

Gemäß der Ausführungsform nach Anspruch 9 sind die genannten Einrichtungen jedoch auf unterschiedliche Satelliten verteilt. Ein Vorteil besteht darin, daß jeder Satellit dadurch kleiner und mit geringerem Gewicht hergestellt werden kann, so daß der Transport eines solchen Satelliten in die Umlaufbahn erleichtert ist. Außerdem kann die Erkennung von Zielen erleichtert sein und die Gefahr von Störungen vermindert sein, wenn sich Sendeantennen und Empfangsantennen auf unterschiedlichen Satelliten befinden, da die Empfangssatelliten als Folge ihrer Radarempfangsfunktion nicht ortbar und die Sendesatelliten infolge ihrer ausschließlichen Radarsendefunktion nicht störbar sind.

Wie in Anspruch 10 vorgesehen, sind vorzugsweise mehrere Satelliten vorgesehen, die ein bestimmtes Gebiet lückenlos überwachen können. Man kann daran denken, derartige Satelliten bei Bedarf möglichst schnell in geeignete Umlaufbahnen zu schießen, damit sie ihre Überwachungsfunktion ausüben können.

Gemäß Anspruch 11 ist in vorteilhafter Weise eine globale Überwachung vorgesehen. Hierzu ist es zweckmäßig, wenn die Satelliten ständig im Umlauf sind. Mit polar umlaufenden Satelliten läßt sich die gesamte Erdoberfläche und der zugehörige Raum darüber erfassen. Vorzugsweise sind relativ niedrige Umlaufbahnen für die Satelliten vorgesehen (d.h. niedriger als eine Höhe, die einer quasistationären Umlaufbahn entspricht), und zwar so daß mit einer relativ kleinen Anzahl von Satelliten ein großer Teil der Erdoberfläche überwacht werden kann.

In den Satelliten, die im Beispiel für die Radarüberwachung (sendeseitig und/oder empfangsseitig) vorgesehen sind, befinden sich vorteilhaft Steuereinrichtungen, durch die beispielsweise die Umschaltung der Antennenstrahlrichtung in gewünschter Weise erfolgen kann. Vorteilhaft sind in diesen Satelliten Speichereinrichtungen vorgesehen, in denen ein Programm zu einem mindestens teilweise selbsttätigen Ablauf der von einem Satelliten ausgeführten Funktionen speicherbar ist und gespeichert ist. Weiterhin vorteilhaft befindet sich in mindestens einem Teil der Satelliten, vorzugsweise solchen, die Radarsignale empfangen, ein Speicher, in dem Merkmale von bekannten Zielen gespeichert sind, um deren Erkennung anhand von Radarsignalen, beispielsweise auch von Sekundärradarsignalen, die diese Ziele abstrahlen, zu ermöglichen oder zu erleichtern.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen:
- Fig. 1: eine schematische Darstellung von über der Erde kreisenden Satelliten,
- Fig. 2: in einer ähnlichen Darstellung ein Beobachtungsgebiet, einen Verfolgungsraum und die Übertragung von Daten,
- Fig. 3: Sende- und Empfangseinrichtungen eines Sende-Satelliten und eines Empfangs-Satelliten.

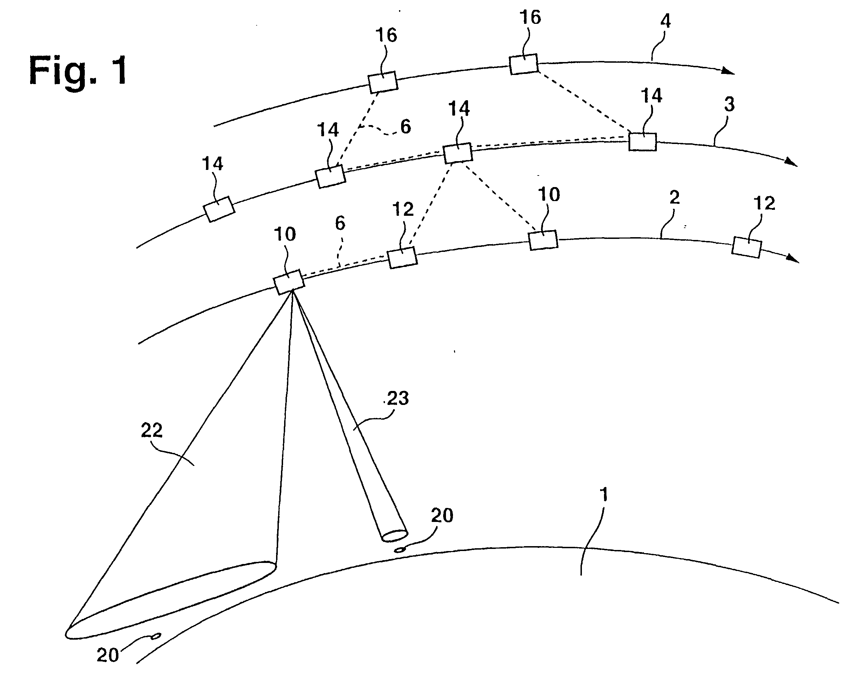

Bei der Ansicht der Fig. 1 kreisen über der Erde 1 in unterschiedlichen praktisch kreisförmigen Bahnen 2, 3, 4 mehrere Satelliten. Im Beispiel liegen die Bahnen 2, 3, 4, wie Fig. 1 zeigt, in unterschiedlicher Höhe, wobei jede Höhe bekanntlich einer bestimmten Umlaufzeit entspricht. In der Bahn 2 befinden sich mit dem Bezugszeichen 10 und 12 bezeichnete Satelliten unterschiedlicher Konstruktion, in der Bahn 3 befinden sich Satelliten 14, und in der Umlaufbahn 3 befinden sich Satelliten 16. Alle Satelliten dienen zur Beobachtung von Objekten, bei denen es sich z.B. um Flugzeuge oder Raketen handeln kann. Im Beispiel ist der Satellit 10 so ausgebildet, daß er mit einer Sensoreinrichtung ein Raumsegment gemäß einer hinsichtlich der Richtung und der Ausdehnung steuerbaren Suchcharakteristik 22 erfaßt, wobei ein relativ großes Raumsegment gleichzeitig beobachtet wird. Der Satellit 10 ist außerdem so ausgebildet, daß er dann, wenn ein Objekt 20 erkannt worden ist, den Ort und gegebenenfalls den Weg dieses Objekts 20 mit einer gegenüber der Suchcharakteristik 22 höheren Genauigkeit, nämlich mit einer Verfolgungscharakteristik 23 mit einem relativ kleinen Winkel verfolgen kann. Die beiden Charakteristiken 22 und 23 können gleichzeitig oder praktisch gleichzeitig (im Zeitmultiplex) anwendbar sein.

Die genannten Sensoren sind entsprechend der festzustellenden Strahlung geeignet gewählt. So enthält der Satellit 10 im Beispiel Sensoren für Lichtstrahlung, insbesondere Infrarotstrahlung, wodurch wärmeabgebende Objekte, insbesondere Raketen beim Start und danach bis zum Brennschluß, erfaßt und verfolgt werden können. In jedem Fall enthält der Satellit Radarempfangsantennen und Radarempfänger, durch die Radarwellen, die von den zu beobachtenden Objekten reflektiert werden, empfangen werden. Der Sender für die Radarwellen kann sich auch im Satelliten 10 befinden (sogenannter monostatischer Betrieb).

Vorteilhaft ist es jedoch, und beim Ausführungsbeispiel ist dies auch vorgesehen, wenn sich der Radarsender mit dem zugeordneten Sendeantennen in einem anderen Satelliten befindet, im Beispiel jeweils in einem der Satelliten 12 (sogenannter bistatischer oder multistatischer Betrieb). Ein offensichtlicher Vorteil besteht hierbei darin, daß deswegen, weil im Satelliten 10 nicht auch noch die Sendeeinrichtung untergebracht werden muß, dieser mit relativ geringem Gewicht hergestellt werden kann.

Bistatischer Betrieb: Sender und Empfänger sind räumlich voneinander getrennt.

Multistatischer Betrieb: Sender und Empfänger sind räumlich voneinander getrennt, und es gibt mehrere Sender und mehrere Empfänger, so daß entweder mehrer Empfänger die reflektierte Strahlung eines Senders empfangenoder ein Empfänger die reflektierte Strahlung meherer Sender empfängt, wozu dann dieser Empfänger ein Mehrträgerempfänger sein muß.

Gegenüber monostatischem Betrieb, bei dem Sender und Empfänger auf derselben Antenne arbeiten - so sind die meisten Radarsysteme aufgebaut - haben bi- bzw. multistatische Betriebsarten Vorteile, die in der völligen Isolation von Sender und Empfänger liegen und, besonders bei multistatischem Betrieb, in einer gegenüber monstatischem Betrieb verbesserten Entdeckungswahrscheinlichkeit.

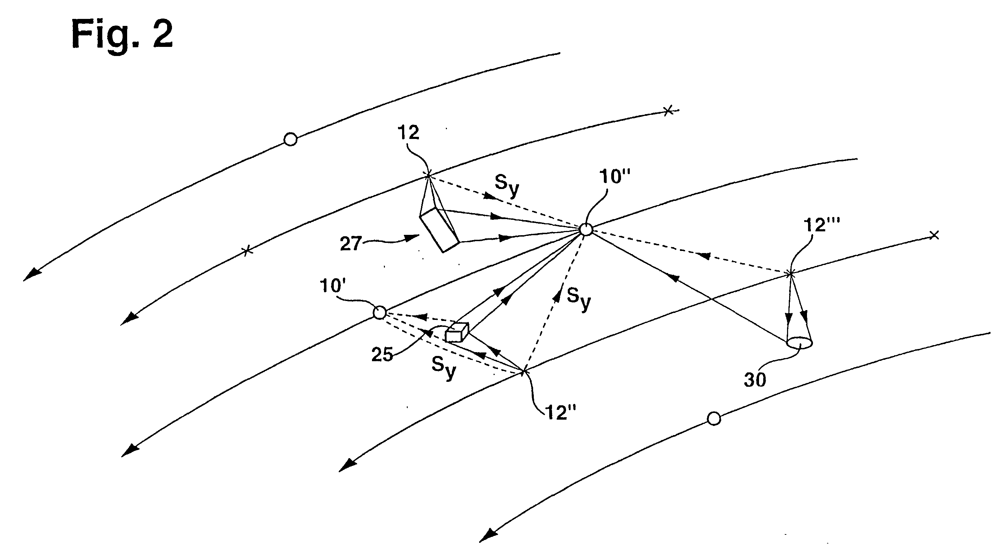

Die Satelliten 14 und/oder 16 dienen im Ausführungsbeispiel dazu, die von den Satelliten 10 empfangenen Signale, gegebenenfalls nach einer Verarbeitung in den Satelliten 10, über Funksignale zu empfangen, gegebenenfalls weiterzuverarbeiten und gegebenenfalls an einen weiteren Satelliten zu leiten, von dem die Signale zu einer Kommandostation 30 (Fig. 2) gesendet werden können, die sich nicht im Sichtbereich desjenigen Satelliten 10 befindet, der gerade das Objekt 20 verfolgt. Wie Fig. 1 zeigt, ermöglicht es das erfindungsgemäße System, den Signalfluß von dem Satelliten 10 zu einem der Satelliten 14 über einen Satelliten 12 zu leiten (siehe die gestrichelt gezeigten beispielhaften Signalwege).

Die in Fig. 1 gezeigten Satelliten können jeweils nur einen entsprechend ihrer Höhe relativ schmalen Streifen auf der Erdoberfläche und im darüber befindlichen Luftraum erfassen. Wenn, was erstrebenswert ist, die gesamte Erdoberfläche oder große Teile von dieser im wesentlichen gleichzeitig beobachtet werden sollen, so ist es erforderlich, zusätzlich zu den in Fig. 1 gezeigten Satelliten weitere Satelliten auf seitlich versetzten Umlaufbahnen anzuordnen. Dabei können polare Umlaufbahnen und/oder andere Umlaufbahnen vorgesehen sein.

In der Darstellung der Fig. 2 fliegen die Empfangssatelliten und die Sendesatelliten auf jeweils getrennten benachbarten Bahnen, so daß sich die Bahnen der Sendesatelliten und die der Empfangssatelliten abwechseln. In der Darstellung empfangen zwei Satelliten (Ampfangs-Satelliten) 10' und 10" Radarsignale eines beobachteten Objekts aus einem Verfolgungsraum 25. Der Verfolgungsraum 25 wird durch einen Satelliten 12" (Sendesatelliten) mit Radarsignalen "beleuchtet". Der Satellit 12' strahlt mit seinen Radarantennen in ein Beobachtungsgebiet 27. Für den Fall, daß ein Objekt im Verfolgungsraum 25 auch von dem Satelliten 12' beleuchtet würde, können in den beiden Empfangssatellitan 10' und 10" jeweils die Radarsignale des Satelliten 12' von denen des Satelliten 12" unterschieden werden. Die beiden Satelliten 12' und 12" sind so gesteuert, daß in dem Fall, daß ein Objekt, das bereits entdeckt worden ist, verfolgt werden soll, diese Satelliten 12' und 12" ihre Radarstrahlung stark gebündelt aussenden, damit die die Radarstrahlung empfangenden Satelliten 10', 10", die ebenfalls aus einem stark gebündelten Bereich empfangen, möglichst viel Energie aufnehmen können. Dadurch wird die Verfolgung und gegebenenfalls Identifizierung des Objekts erleichtert.

In Fig. 2 ist ein multistatischer Betrieb verwirklicht: Zwei Empfangssatelitten 10' und 10" sind wenigstens einem Sendesatelliten 12" zugeordnet.

Die Nachrichtenverbindung der genannten Satelliten 10', 10", 12' und 12" mit der von diesen aus nicht oder nicht gut direkt erreichbaren Kommandostation 30 (im Beispiel auf der Erdoberfläche) erfolgt im Beispiel mit Hilfe eines weiteren Sende-Satelliten 12"', der in Nachrichtenverbindung mit dem Satelliten 10 " steht. Zwischen den beiden zuletzt genannten Satelliten werden insbesondere Telemetriedaten ausgetauscht. Telekommandodaten werden im Beispiel direkt von der Kommandostation 30 zum Satelliten 10" gesendet. Zur Unterstützung des Empfangsbetriebs der Satelliten 10' und 10" senden die Satelliten 12' und 12" eine Synchronisationsinformation Sy.

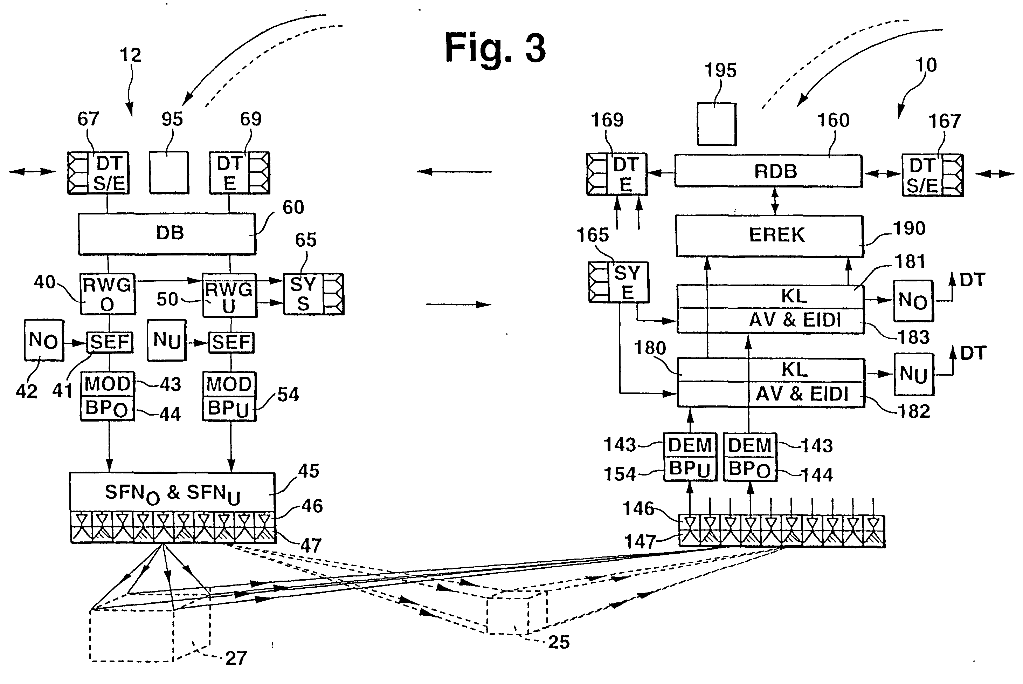

Fig. 3 zeigt schematisch bei den Sendesatelliten 12 und Empfangssatelliten 10 vorhandene technische Einrichtungen sowie die Bildung der Beobachtungs- und Verfolgungsräume im Zusammenwirken mit den Antennenanlagen der beiden Satelliten.

Im linken Teil der Fig. 3 sind technische Einrichtungen des Sendesatelliten 12 gezeigt. Der Satellit 12 enthält einen Radarwellenformgenerator (RWG) 40, eine Einrichtung (SEF) 41 zum Einfügen von durch eine Nachrichtenquelle (No) 42 gelieferten Signalen in das Radarsignal, einen Modulator (MOD) 43, einen Bandpaß (BPo) 44 für einen oberen Frequenzbereich (bezeichnet durch den Index "o"), ein Strahlformungsnetzwerk (SNF) 45, eine Verstärkeranordnung 46 und schließlich eine Radarantennenanordnung 47, der die von der Verstärkeranordnung 46 verstärkten Radarsignale zur Abstrahlung zugeführt werden. Die Einrichtungen 40 bis 43 sind auch für einen unteren Frequenzbereich (Index "u") vorgesehen und dort mit den Bezugszeichen 50 bis 54 versehen. Die Radarwellengeneratoren 40 und 50 erhalten ihre Informationen aus einer Datenbank (DB) 60. Diese speichert Daten, die für die Erzeugung des Radarsignals benötigt werden, wozu unter anderem Frequenzen, Frequenzmuster und Informationen über die Richtung von abzustrahlenden Radarsignalen gehören. Der Sendesatellit weist zusätzlich zur Radarantennenanordnung 47 noch weitere Antennenanordnungen auf. So ist mit den Radarwellenformgeneratoren 40 und 50 eine Antennenanordnung 65 gekoppelt, die dazu dient, Synchronisationsinformation (Sy) zu einer zugeordneten Antenne des Empfangssatelliten zu senden. Außerdem ist eine Sende/Empfangs-Antennenanordnung 67 vorgesehen, die es gestattet, Steuerdaten (DT) zu anderen Sendesatelliten oder zur Kommandostation 30 zu senden und von diesen zu empfangen. Schließlich ist eine Empfangsantennenanordnung 69 vorgesehen, die Nutzdaten (DT) von zugeordneten Empfangssatelliten empfängt, die Sendesteuerdaten und Sendenachrichten beinhalten.

Beim Empfangssatelliten 10 sind Einrichtungen, die den Einrichtungen des Sendesatelliten 12 weitgehend entsprechen, bzw. sich nur dadurch unterscheiden, daß Sendung und Empfang vertauscht sind, mit einem um 100 erhöhten Bezugszeichen versehen. Demgemäß seist der Empfangssatellit 10 zum Empfang von Radarsignalen eine Radarantennenanordnung 147 auf, die mit einer Verstärkeranordnung 146 verbunden ist, von wo aus die empfangenen Radarsignale für den oberen und den unteren Frequenzbereich zu einem Bandpaß (BPo) 144 und zu einem Bandpaß (BPu) 154 und von dort zu Demodulatoren (DEM) 143 gelangen. Zum Empfangen der Synchronisationsinformation dient eine Antennenanordnung 165, zum Aussenden von Nutzdaten an andere Satelliten, vornehmlich Sendesatelliten, dient eine Antennenanordnung 169, und der Austausch von Nutzdaten mit anderen Empfangssatelliten und mit der Kommandostation 30 erfolgt durch eine Antennenanordnung 167. Eine Datenbank (RDB) 160 enthält Informationen, die für die Erkennung von Objekten verwendet werden. Hierzu gehören Informationen, die aus dem empfangenen Radarsignal auf die Form des Objekts einschließlich seiner Größenabmessungen schließen lassen und somit zu seiner Identifizierung beitragen können. Auch Informationen über Sekundärradarsignale bekannter Objekte sind hier gespeichert.

Die Datenbanken der Empfangssatelliten stehen so über die Sende/Empfangsanordnung 167 miteinander in Verbindung, daß sie eine verteilte virtuelle Gesamtdatenbasis bilden, auf die die Kommandostation 30 zugreifen kann.

Die die Modulatoren 143 und 144 verlassenden demodulierten Signale gelangen zu Zielklassifizierungseinrichtungen (KL) 180, 181, denen Einrichtungen 182, 183 zur Bestimmung der jeweiligen Ausleuchtzone, aus der die Signale zur Zielentdeckung ausgewertet werden, vorgeschaltet sind. Die Ausgangssignale der Klassifizierungseinrichtungen 180, 181 gelangen zu einer Einrichtung (EREK) 190 zur Ereigniserkennung, die einen Vergleich mit den Daten der Datenbank (RDB) 160 vornimmt und im Zusammenwirken mit dieser eine bestmögliche Identifizierung bewirkt. Dabei bedeuten AV Ausleuchtzonenverfolgung und EIDI Eigenschaftsdiskriminator.

In den Klassifizierungseinrichtungen werden Nachrichten, z. B. Telekommandos von der Kommandostation 30, erkannt und, soweit sie nicht dem Aufdatieren der Empfangsdatenbank RDB dienen, über Zwischenspeicher No/u dem Intersatelliten- Sende-Empfangssystemen (DT) 167, 169 zur Weiterleitung vornehmlich an andere Empfangssapelliten, aber auch an Sendesatelliten zugeleitet.

Die gesamte Steuerung erfolgt durch eine Steuereinrichtung 95 bzw. 195, die von der Station 30 aus betätigt und mit Daten versorgt werden kann.

Wird ein zu bekämpfendes Ziel erkannt und eine Abwehrwaffe (z.B. Rakete) von der Erdoberfläche abgeschossen, so werden an diese von der Radarantennenanordnung 47 Steuersignale gesendet, damit die Abwehrwaffe das Ziel sicher erreicht.

Es versteht sich, daß das System trotz seines generellen Bestimmungszwecks für die Verteidigung auch für einen Angriff gegen Luft und Bodenziele geeignet ist, indem es als Leitsystem für Bomber, Marschflugkörper oder ballistische Raketen dient.

Zur Führung von Abwehrwaffen gegen Flugziele wird das System als Telekommando/Telemetriesystem (TM/TC - System) und als Leitsystem benutzt:
- Zwischen der Kommandostation 30 und der fliegenden Abwehrwaffe wird eine TM/TC - Verbindung unterhalten, mit der der Kurs und das Wirkungsverhalten der Abwehrwaffe aufdatiert werden.
- Mit der Verfolgungscharakteristik des Systems wird der Kurs der Abwehrwaffe gleichzeitig vermessen, so daß über das TM/TC - System eine Kursoptimierung möglich ist.
- Gleichzeitig verfolgt das System das anfliegende Ziel.
- Die Erzeugung der TC - Daten zum Zielanflug der Abwehrwaffe kann weitgehend in den vernetzten Datenbanken des Systems erfolgen, so daß die Kommandostation 30 nur noch bestimmte Freigaben erteilen muß, sie kann aber auch komplett in der Kommandostation erfolgen.

Unter einer Radar - Sensoreinrichtung wird entweder ein Radarsender oder ein Radarempfänger verstanden. Unter einem Radarsensor wird immer ein vollständiges aktives Radarsystem bestehend aus einem oder mehreren Radarsendern und einem oder mehreren Radarempfängern verstanden, die in geeigneter Zuordnung zueinander so betrieben werden, daß ein monostatischer, ein bistatischer oder ein multistatischer Betrieb vorliegt.

## Patentansprüche

1. Satellitengestütztes Verteidingungssystem mit mehreren die Erde (1) umkreisenden Satelliten (10,12,14,16), die mit Sensor und Nachrichtenübermittlungs-Einrichtungen (40,41,42,43,44,45,46,47,143,144,146,147,165,167) zum Erfassen und Verfolgen beweglicher Ziele (20) ausgestattet sind, die Sensor und Nachrichtenübermittlungs-Einrichtungen Mittel zum Führen von Abwehrwaffen aufweisen, die von der Erdoberfläche abgeschossen sind, und die Sensoreinrichtungen mindestens eines Satelliten Radarsensoreinrichtungen aufweisen, **dadurch gekennzeichnet, daß** zur Nachrichtenübermittlung mindestens teilweise die selben Antennen (45) und die selben Frequenzbereiche vorgesehen sind wie für die Erfassung und Verfolgung durch die Radareinrichtungen.

2. System nach Anspruch 1, **dadurch gekennzeichnet, daß** die Sensoreinrichtungen mindestens eines Satelliten (10,12,14,16) Licht-Sensoreinrichtungen, insbesondere Infrarot-Sensoreinrichtungen, aufweisen.

3. System nach einem der vorhergehenden Ansprüche, **dadurch gekennzeichnet, daß** die Sensoreinrichtungen mit einer Suchcharakteristik (22) zum Erfassen von Zielen und mit einer von der Suchcharakteristik vorzugsweise abweichenden Verfolgungscharakteristik (23) zum Verfolgen von Zielen (20) und zum Führen von Abwehrwaffen betreibbar sind.

4. System nach einem der vorhergehenden Ansprüche, **dadurch gekennzeichnet, daß** mindestens einige der Satelliten (10,12,14,16) durch Nachrichtenverbindungen (6) verbindbar sind.

5. System nach Anspruch 4, **dadurch gekennzeichnet, daß** mindestens einer der Satelliten (10,12,14,16) Einrichtungen zum Durchleiten von Informationen an einen anderen Satelliten aufweist.

6. System nach einem der vorhergehenden Ansprüche, **dadurch gekennzeichnet, daß** mindestens einer der Satelliten mit einer Bodenstation (30) durch eine Nachrichtenverbindung verbindbar ist.

7. System nach einem der vorhergehenden Ansprüche, **dadurch gekennzeichnet, daß** mindestens einer der Satelliten (10,12,14,16) mit einer Luftraumstation durch eine Nachrichtenverbindung verbindbar ist.

8. System nach einem der vorhergehenden Ansprüche, **dadurch gekennzeichnet, daß** Radar-Sendeeinrichtungen und Radar-Empfangseinrichtungen auf mindestens einem Satelliten (10,12,14,16) gemeinsam vorgesehen sind.

9. System nach einem der vorhergehenden Ansprüche, **dadurch gekennzeichnet, daß** Radar-Sendeeinrichtungen und Radar-Empfangseinrichtungen auf unterschiedlichen Satelliten (10,12,14,16) vorgesehen sind.

10. System nach einem der vorhergehenden Ansprüche, **dadurch gekennzeichnet, daß** mehrere Satelliten (10,12,14,16) derart vorgesehen sind, daß ein vorbestimmtes Gebiet lückenlos überwachbar ist.

11. System nach Anspruch 10, **dadurch gekennzeichnet, daß** eine globale Überwachung vorgesehen ist.

12. System nach einem der vorhergehenden Ansprüche, **dadurch gekennzeichnet, daß** polar umlaufende satelliten (10,12,14,16) vorgesehen sind.

13. System nach einem der vorhergehenden Ansprüche, **dadurch gekennzeichnet, daß** Satelliten (10,12,14,16) in niedrigen Umlaufbahnen mit einer Umlaufzeit von weniger als 24 Stunden vorgesehen sind.

14. System nach einem der vorhergehenden Ansprüche, **dadurch gekennzeichnet, daß** mindestens ein Satellit eine Kommunikationseinrichtung zur Nachrichtenverbindung mit einer Funkempfangseinrichtung einer fernsteuerbaren Waffe aufweist.

15. Verfahren zur satellitengestützten Verteidigung durch Verwendung eines Verteidigungssystems mit mehreren die Erde umkreisenden Satelliten, die mit Sensor- und Nachrichtenübermittlungs-Einrichtungen zum Erfassen und Verfolgen beweglicher Ziele ausgestattet sind, wobei die Sensor- und Nachrichtenübermittlungs-Einrichtungen Mittel zum Führen von Abwehrwaffen aufweisen, und die Sensoreinrichtungen mindestens eines Satelliten Radarsensoren aufweisen **dadurch gekennzeichnet, daß** zur Nachrichtenübermittlung mindestens teilweise die selben Antennen (45) und die selben Frequenzbereiche vorgesehen sind wie für die Erfassung und Verfolgung durch die Radareinrichtungen.

16. Verfahren nach Anspruch 15, **dadurch gekennzeichnet, daß** das Verteidigungssystem die Merkmale mindestens eines der Ansprüche 2 bis 15 aufweist.

## Claims

1. Satellite-assisted defence system having two or more satellites (10, 12, 14, 16) which orbit around the earth (1) and are equipped with sensor and information transmission devices (40,41,42,43,44,45,46,47,143,144, 146,147,165,167) for detection and tracking of moving targets (20), which sensor and information transmission devices have means for guiding defensive weapons, which are fired from the earth's surface, and the sensor devices of at least one satellite having radar sensor devices, **characterized in that**, at least in some cases, the same antennas (45) and the same frequency bands are provided for information transmission as for the detection and tracking by the radar devices.

2. System according to Claim 1, **characterized in that** the sensor devices of at least one satellite (10, 12, 14, 16) have light sensor devices, in particular infrared sensor devices.

3. System according to one of the preceding claims, **characterized in that** the sensor devices can be operated with a search characteristic (22) for detection of targets and with a tracking characteristic (23), which is preferably not the same as the search characteristic, for tracking targets (20) and for guiding defensive weapons.

4. System according to one of the preceding claims, **characterized in that** at least some of the satellites (10, 12, 14, 16) can be linked by means of information channels (6).

5. System according to Claim 4, **characterized in that** at least one of the satellites (10, 12, 14, 16) has devices for transmitting information to other satellites.

6. System according to one of the preceding claims, **characterized in that** at least one of the satellites can be linked to a base station (30) by means of an information channel.

7. System according to one of the preceding claims, **characterized in that** at least one of the satellites (10, 12, 14, 16) can be linked to an airspace station by means of an information link.

8. System according to one of the preceding claims, **characterized in that** radar transmission devices and radar receiving devices are provided jointly on at least one satellite (10, 12, 14, 16).

9. System according to one of the preceding claims, **characterized in that** radar transmission devices and radar receiving devices are provided on different satellites (10, 12, 14, 16).

10. System according to one of the preceding claims, **characterized in that** two or more satellites (10, 12, 14, 16) are provided in such a way that a predetermined region can be surveyed without any gaps.

11. System according to Claim 10, **characterized in that** global suvery is provided.

12. System according to one of the preceding claims, **characterized in that** satellites (10, 12, 14, 16) in polar orbits are provided.

13. System according to one of the preceding claims, **characterized in that** satellites (10, 12, 14, 16) are provided in low orbits with an orbit time of less than 24 hours.

14. System according to one of the preceding claims, **characterized in that** at least one satellite has a communication device for the information link to a radio receiving device in a remotely controllable weapon.

15. Method for satellite-assisted defence by use of a defence system having two or more satellites which orbit the earth and are equipped with sensor and information transmission devices for detection and tracking of moving targets, with the sensor and information transmission devices having means for guiding defensive weapons, and the sensor devices of at least one satellite having radar sensors, **characterized in that**, at least in some cases, the same antennas (45) and the same frequency bands are provided for information transmission as for the detection and tracking by the radar devices.

16. Method according to Claim 15, **characterized in that** the defence system has the features of at least one of Claims 2 to 15.

## Revendications

1. Système de défense assisté par satellites comportant plusieurs satellites (10, 12, 14, 16) tournant autour de la terre (1) qui sont équipés de dispositifs à capteurs et de dispositifs de transmission de messages (40, 41, 42, 43, 44, 45, 46, 47, 143, 144, 146, 147, 165, 167) afin de détecter et de poursuivre des cibles mobiles (20), les dispositifs à capteurs et les dispositifs de transmission de messages présentant des moyens pour guider des armes défensives qui ont été lancées depuis la surface de la terre, et les dispositifs à capteurs d'au moins un satellite comportant des dispositifs à capteurs radar, **caractérisé en ce qu'**au moins partiellement les mêmes antennes (45) et les mêmes plages de fréquences sont prévues pour la transmission de messages que pour la détection et la poursuite par les dispositifs radar.

2. Système selon la revendication 1, **caractérisé en ce que** les dispositifs à capteurs d'au moins un satellite (10, 12, 14, 16) présentent des dispositifs à capteurs de lumière, en particulier des dispositifs à capteurs d'infrarouges.

3. Système selon l'une quelconque des revendications précédentes, **caractérisé en ce que** les dispositifs à capteurs peuvent fonctionner avec une caractéristique de recherche (22) pour détecter des cibles et avec une caractéristique de poursuite (23) de préférence différente de la caractéristique de recherche pour poursuivre des cibles (20) et pour guider des armes défensives.

4. Système selon l'une quelconque des revendications précédentes, **caractérisé en ce qu'**au moins quelques satellites (10, 12, 14, 16) peuvent être reliés par des canaux de transmission de message (6).

5. Système selon la revendication 4, **caractérisé en ce qu'**au moins l'un des satellites (10, 12, 14, 16) présente des dispositifs pour transmettre des informations à un autre satellite.

6. Système selon l'une quelconque revendications précédentes, **caractérisé en ce qu'**au moins l'un des satellites peut être relié à une station de base (30) par un canal de transmission de message.

7. Système selon l'une quelconque des revendications précédentes, **caractérisé en ce qu'**au moins l'un des satellites (10, 12, 14, 16) peut être relié par un canal de transmission de message à une station située dans l'espace aérien.

8. Système selon l'une quelconque des revendications précédentes, **caractérisé en ce que** des dispositifs émetteurs radar et des dispositifs récepteurs radar sont prévus ensemble sur au moins un satellite (10, 12, 14, 16).

9. Système selon l'une quelconque des revendications précédentes, **caractérisé en ce que** des dispositifs émetteurs radar et des dispositifs émetteurs radar sont prévus sur des satellites (10, 12, 14, 16) différents.

10. Système selon l'une quelconque des revendications précédentes, **caractérisé en ce que** plusieurs satellites (10, 12, 14, 16) sont prévus de sorte qu'une zone prédéterminée puisse être surveillée complètement.

11. Système selon la revendication 10, **caractérisé en ce qu'**une surveillance globale est prévue.

12. Système selon l'une quelconque des revendications précédentes, **caractérisé en ce que** des satellites (10, 12, 14, 16) tournant autour de la terre d'un pôle à l'autre sont prévus.

13. Système selon l'une quelconque des revendications précédentes, **caractérisé en ce que** des satellites (10, 12, 14, 16) sont prévus dans de petites orbites présentant une durée de révolution inférieure à 24 heures.

14. Système selon l'une quelconque des revendications précédentes, **caractérisé en ce qu'**au moins un satellite présente un dispositif de communication pour la connexion de message à un dispositif récepteur radio d'une arme pouvant être commandée à distance.

15. Procédé de défense assisté par satellites par l'utilisation d'un système de défense comportant plusieurs satellites tournant autour de la terre qui sont équipés de dispositifs à capteurs et de dispositifs de transmission de messages pour détecter et poursuivre des cibles mobiles, les dispositifs à capteurs et les dispositifs de transmission de messages présentant des moyens pour guider des armes défensives, et les dispositifs à capteurs d'au moins un satellite comportant des capteurs radar, **caractérisé en ce qu'**au moins partiellement les mêmes antennes (45) et les mêmes plages de fréquences sont prévues pour la transmission de messages que pour la détection et la poursuite par les dispositifs radar.

16. Procédé selon la revendication 15, **caractérisé en ce que** le système de défense présente les caractéristiques d'au moins l'une quelconque des revendications 2 à 15.
